Europäisches Patentamt

European Patent Office

Office européen des brevets

(19)

(11) Veröffentlichungsnummer: **0 210 526**
**B1**

(12) # EUROPÄISCHE PATENTSCHRIFT

(45) Veröffentlichungstag der Patentschrift:
24.05.89

(51) Int. Cl.⁴: **G 21 C 3/34**

(21) Anmeldenummer: **86109632.9**

(22) Anmeldetag: **14.07.86**

(54) **Kernreaktorbrennelement.**

(30) Priorität: **24.07.85 DE 3526504**

(43) Veröffentlichungstag der Anmeldung:
**04.02.87 Patentblatt 87/6**

(45) Bekanntmachung des Hinweises auf die Patenterteilung:
**24.05.89 Patentblatt 89/21**

(84) Benannte Vertragsstaaten:
**DE SE**

(56) Entgegenhaltungen:
**EP-A- 0 141 208**
**DE-A- 3 139 823**
**FR-A- 1 390 497**
**FR-A- 2 449 324**

(73) Patentinhaber: **Siemens Aktiengesellschaft Berlin und München, Wittelsbacherplatz 2, D-8000 München 2 (DE)**

(72) Erfinder: **Lettau, Hans, Dipl.-Ing. (FH), Lettenfeld 14, D-8521 Effeltrich (DE)**

**Beschreibung**

Die Erfindung betrifft ein Kernreaktorbrennelement nach dem Oberbegriff des Patentanspruchs 1.

Ein solches Kernreaktorbrennelement ist in der älteren aber später als das Prioritätsdatum dieser Anmeldung veröffentlichten EP-A 0 192 092 entsprechend der DE-A 3 504 640.6 bereits vorgeschlagen worden. Die Distanzhülse, die sich im Abstandhalter des vorgeschlagenen Kernreaktorbrennelementes in jedem Teilgitter zwischen zwei Haupthülsen befindet, ist als eigenständiges Teil zwischen den beiden Haupthülsen an diesen anliegend angeordnet. Die Gittermaschen dieses Abstandhalters sind an den von den Paaren miteinander fluchtender Haupthülsen nicht besetzten Zwischenpositionen für Gittermaschen durch die benachbarten Paare miteinander fluchtender Haupthülsen mitgebildet, was sich verringernd auf den Strömungswiderstand des Abstandhalters auf ein Kühlmittel auswirkt, das das Kernreaktorbrennelement in einem Kernreaktor in Längsrichtung durchströmt.

Der Erfindung liegt die Aufgabe zugrunde, diesen Strömungswiderstand des Abstandhalters noch weiter zu reduzieren.

Zur Lösung dieser Aufgabe hat ein Kernreaktorbrennelement der eingangs erwähnten Art erfindungsgemäß die Merkmale des kennzeichnenden Teiles des Patentanspruchs 1.

Dadurch werden Wanddopplungen im Abstandhalter vermieden. Deshalb vergrößert sich der Querschnitt, der im Abstandhalter für das Kühlmittel zur Verfügung steht. Außerdem wird durch die an den Kanten der Haupthülsen angeformten Distanzhülsenteile der Formwiderstandsbeiwert des Abstandhalters verbessert. Beides wirkt verringernd und auf den Strömungswiderstand des Abstandhalters und damit auch verringernd auf die Druckverluste für ein das Kernreaktorbrennelement in Längsrichtung durchströmendes Kühlmittel.

Vorteilhafte Ausbildungen des erfindungsgemäßen Kernreaktorbrennelementes, die teils eine fertigungsgünstige Struktur des Abstandhalters, teils besonders verringerte Neutronenabsorption und noch weiter verringerten Strömungswiderstand des Abstandhalters bewirken, sind Gegenstand der Patentansprüche 2 bis 13.

Die Erfindung und ihre Vorteile seien anhand der Zeichnung an einem Ausführungsbeispiel näher erläutert:

Fig. 1 zeigt schematisch in Längsansicht ein erfindungsgemäßes Kernreaktorbrennelement.

Fig. 2 zeigt eine Draufsicht auf einen Ausschnitt aus einem Abstandhalter in einem erfindungsgemäßen Kernreaktorbrennelement nach Fig. 1.

Fig. 3 zeigt einen Längsschnitt entsprechend der strichpunktierten Linie III - III in Fig. 2.

Fig. 4 bis 9 zeigen jeweils in Draufsicht und Seitenansicht Einzelteile aus dem Abstandhalter nach den Fig. 2 und 3.

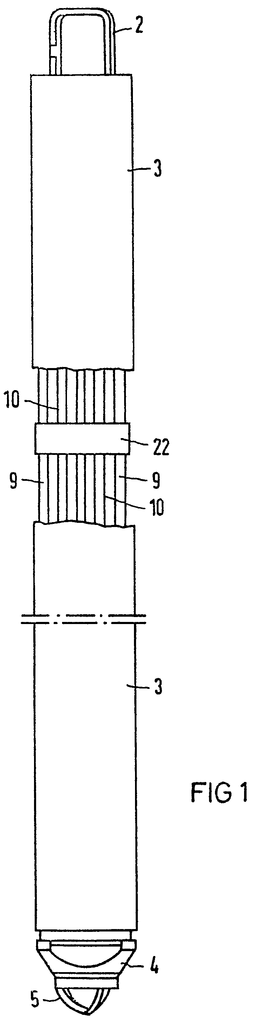

Ein Kernreaktorbrennelement nach Fig. 1 ist für einen Siedewasserkernreaktor bestimmt und weist einen nicht näher erkennbaren Brennelementkopf mit einem Haltegriff 2 auf der Oberseite einer quadratischen Gitterplatte auf. Auf der Oberseite dieser quadratischen Gitterplatte befinden sich ferner zwei oder vier ebenfalls nicht erkennbare Stehbolzen, auf denen ein dem Kernreaktorbrennelement zugeordneter Hüllkasten 3 aus Blech mit zwei oder vier nicht sichtbaren Querstreifen ebenfalls aus Blech ruht, die in zwei oder vier Ecken innen im Hüllkasten 3 an dessen Oberende angebracht sind. Einer dieser Querstreifen ist mit dem betreffenden Stehbolzen verschraubt. Der Hüllkasten 3 hat quadratischen Querschnitt und ist an beiden Enden offen. Die Gitterplatte selbst ist mit einer Vielzahl von Strömungsdurchführungen in Längsrichtung des Kernreaktorbrennelementes versehen, durch die Wasser im Reaktorkern des Siedewasserkernreaktors hindurchströmt. Diese Gitterplatte ist rechtwinklig zur Längsrichtung des Kernreaktorbrennelementes angeordnet.

Das Kernreaktorbrennelement nach Fig. 1 ist ferner mit einem Brennelementfuß 4 versehen, der ebenfalls eine verdeckte und nicht erkennbare quadratische Gitterplatte aufweist. Auch diese quadratische Gitterplatte hat eine Vielzahl von Strömungsdurchführungen in Längsrichtung des Kernreaktorbrennelementes für Wasser im Reaktorkern des Siedewasserkernreaktors. Auf der Unterseite ist die Gitterplatte des Brennelementfußes 4 mit einem zur Gitterplatte offenen Paßorgan 5 versehen, das in einer Masche eines im Reaktorkern des Siedewasserkernreaktors befindlichen sogenannten unteren Kerngitters eingesetzt ist.

Das Kernreaktorbrennelement nach Fig. 1 weist außerdem eine Reihe als Haltestäbe 9 für Kopfteil und Fußteil 4 des Kernreaktorbrennelementes ausgebildete, mit Kernbrennstoff gefüllte Brennstäbe auf. Diese Haltestäbe 9 sind in die Gitterplatte des Brennelementfußes 4 eingeschraubt und durchgreifen die Gitterplatte des Brennelementkopfes und sind dort mit einer an der Oberseite der Gitterplatte befindlichen Mutter an der Gitterplatte angeschraubt.

Weitere mit Kernbrennstoff gefüllte Brennstäbe 10 sind mit ihren Enden lose in Durchführungen in den Gitterplatten von Kopfteil und Fußteil 4 des Kernreaktorbrennelementes eingesetzt. Auf ihren Oberenden sitzen als Schraubenfedern ausgebildete Niederhaltefedern, die Druckfedern sind und sich jeweils am Brennstab 10 einerseits und an der Unterseite der Gitterplatte des Brennelementkopfes andererseits abstützen.

Das Kernreaktorbrennelement nach Fig. 1 weist schließlich zwischen dem Brennelementkopf und dem Brennelementfuß 4 mehrere rechteckige, im vorliegenden Fall quadratische Abstandhalter auf, die mit den quadratischen Gitterplatten von Kopfteil und Fußteil 4 fluchten und von denen ein Abstandhalter 22 in Fig. 1 erkennbar ist. Die anderen Abstandhalter sind genauso ausgebildet wie der Abstandhalter 22, sind aber durch den dem Brennelement zugeordneten Hüllkasten 3 genauso wie die Gitterplatte des Kopfteiles und die Gitterplatte des Fußteiles 4 verdeckt und daher nicht sichtbar.

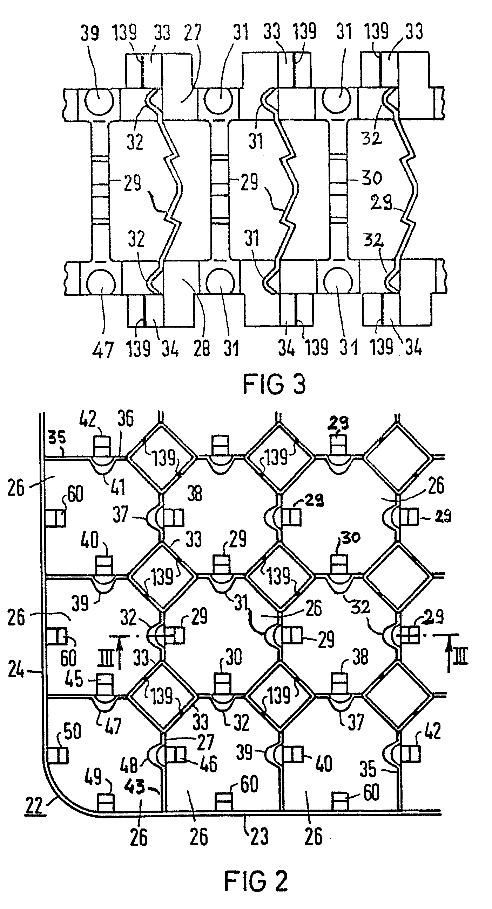

Ein in den Fig. 2 und 3 näher dargestellter Abstandhalter 22 ist quadratisch und besteht aus einer Nickel-Chrom-Eisenlegierung. Es sind zwei flache, ebene Außenstege 23 und 24 zu erkennen, die hochkant rechtwinklig zueinander stehen und die an den Ecken des Abstandhalters 22 eine Abrundung bilden. Der Abstandhalter 22 hat ferner Gittermaschen 26, die sich wie die Felder eines Schachbrettes an dicht in Zeilen und in zu diesen Zeilen rechtwinkligen Spalten angeordneten Positionen befinden. Durch die Gittermaschen 26 greift jeweils ein in den Fig. 2 und 3 nicht dargestellter, Kernbrennstoff enthaltender Brennstab des Kernreaktorbrennelementes, zu dem die Außenstege 23 und 24 rechtwinklig sind und dem diese Außenstege 23 und 24 flach zugewandt sind. Ein solcher Brennstab enthält Kernbrennstoff in einem gasdicht verschlossenen Hüllrohr aus einer Zirkoniumlegierung.

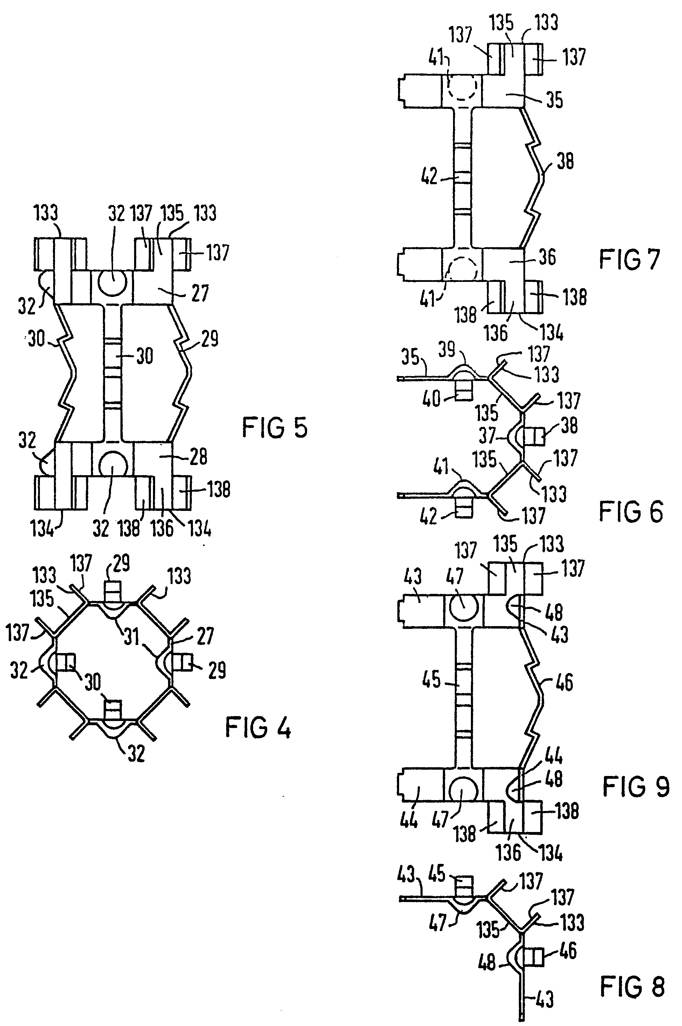

Innerhalb der Außenstege 23 und 24 des Abstandhalters 22 sind Paare miteinander fluchtender Haupthülsen 27 und 28, die in den Fig. 4 und 5 näher dargestellt sind und die im Abstandhalter 22 zueinander und zu den Brennstäben parallele Längsachsen haben, wie die Felder gleicher Farbe des Schachbrettes an den Positionen der Gittermaschen 26 in Zeilen und in zu diesen Zeilen rechtwinkligen Spalten jeweils unter Freilassung einer Zwischenposition zwischen zwei besetzten Positionen angeordnet.

Wie insbesondere Fig. 4 und 5 zeigen, haben die Haupthülsen 27 und 28 aller Haupthülsenpaare des Abstandhalters 22 einen Querschnitt mit deckungsgleicher Außenkontur, die ein regelmäßiges Achteck ist. An zwei Seiten dieses Achteckes, die zu demselben Außensteg 23 oder 24 parallel sind, sind die Haupthülsen 27 und 28 mit Verbindungsstegen 29 und 30 versehen, die eine zu den Längsachsen der Haupthülsenpaare 27 und 28 parallele Richtung übergreifen. Diese Verbindungsstege 29 und 30 sind an den Haupthülsen 27 und 28 jeweils in der Mitte der Seite des die Außenkontur des Querschnittes bildenden regelmäßigen Achteckes angeformt und haben eine Breite, die etwa gleich 1/3 der Länge der Seite dieses regelmäßigen Achteckes ist. Zwei an zueinander parallelen Seiten dieses Achteckes sitzende Verbindungsstege 29 und 30 sind in der Mitte jeweils in die gleiche Richtung gewölbt, d.h. ein Verbindungssteg 29 ist in bezug auf die Haupthülsen 27 und 28 nach außen und ein Verbindungssteg 30 in bezug auf die Haupthülsen 27 und 28 nach innen gewölbt. Ferner besitzen die Haupthülsen 27 und 28 in der Mitte der Seiten der ein regelmäßiges Achteck bildenden Außenkontur ihres Querschnittes auf der Haupthülsenwand eine starre Noppe 31 bzw. 32. Die starre Noppe 31 ist nach innen gerichtet, wenn der Verbindungssteg 29 an der Seite der Außenkontur in bezug auf die Haupthülse 27 oder 28 nach außen gerichtet ist, und die starre Noppe 32 ist in bezug auf die Haupthülse 27 oder 28 nach außen gerichtet, wenn der Verbindungssteg 30 in bezug auf diese Haupthülse 27 oder 28 nach innen gerichtet ist.

Im Abstandhalter 22 sind in Diagonalrichtung zwischen den Haupthülsen 27 und 28 Paare von miteinander fluchtenden Distanzhülsen 33 und 34 angeordnet, deren Querschnitt kleiner als der Querschnitt der Haupthülsen 27 und 28 ist und als Außenkontur ein Rechteck haben kann. Diese Außenkontur ist beim Ausführungsbeispiel ein Quadrat, dessen Seitenlänge gleich der Seitenlänge der ein regelmäßiges Achteck bildenden Außenkontur des Querschnittes der Haupthülsen 27 und 28 ist. Diese Distanzhülsen 33 und 34 befinden sich zwischen den Haupthülsen 27 bzw. 28 und sind jeweils aus zwei Distanzhülsenteilen 133 bzw. 134 gebildet, von denen jeweils eines an der Außenkante einer Haupthülse 27 bzw. 28 an der Seite der Außenkontur zwischen zwei Seiten mit Verbindungsstegen 29 bzw. 30 und Noppen 31 bzw. 32 angeformt ist. Jedes Distanzhülsenteil 133 bzw. 134 ist eine halbe Distanzhülse mit einer in die Haupthülse 27 bzw. 28 übergehenden Distanzhülsenseite 135 bzw. 136 und zwei an dieser Distanzhülsenseite 135 bzw. 136 sitzenden halben Distanzhülsenseiten 137 bzw. 138. Die halben Distanzhülsenseiten 137 bzw. 138 von zwei benachbarten Haupthülsen 27 bzw. 28 sind an Schweißstellen 139 bzw. 140 miteinander verschweißt. Die Haupthülsen 27 bilden zusammen mit den an ihnen angeformten Distanzhülsen 33 ein erstes Teilgitter des Abstandhalters 22 und die Haupthülsen 28 zusammen mit den an ihnen angeschweißten Distanzhülsen 34 ein zweites, zu dem ersten Teilgitter paralleles Teilgitter, und die Distanzhülsen 33 und 34 sitzen jeweils auf der Außenseite dieser Teilgitter.

An den Positionen der Gittermaschen 26 in einer Reihe bzw. Spalte an einem Außensteg 23 bzw. 24 sind jeweils unter Freilassung einer Zwischenposition zwischen zwei besetzten Positionen ein Paar miteinander fluchtender Bügel 35 und 36 entsprechend Fig. 6 und 7 aus U-förmigen, den nicht dargestellten Stäben in den Gittermaschen 26 flach zugewandten Stegen angeordnet. Mit ihren beiden Schenkeln stehen die Bügel 35 und 36 rechtwinklig auf der Innenseite des betreffenden Außensteges 23 oder 24 auf, den sie mit einer Zunge durchgreifen, an der sie mit dem betreffenden Außensteg 23 oder 24 verschweißt sind.

Zwischen ihren beiden Schenkeln haben die Bügel 35 und 36 einen Querschnitt mit einer Außenkontur eines halben regelmäßigen Achteckes, das deckungsgleich mit zum die Außenkontur des Querschnittes der Haupthülsen 27 und 28 bildenden regelmäßigen Achteck ist. In jedem Teilgitter des Abstandhalters 22 befinden sich in jeder der beiden Diagonalrichtungen zwischen zwei Haupthülsen 27 und 28 und einem Bügel 35 bzw. 36 jeweils eine Distanzhülse 33 bzw. 34 mit einem Querschnitt, dessen Außenkontur ein Rechteck sein kann. Beim Ausführungsbeispiel ist die Außenkontur ein Quadrat mit einer Seitenlänge, die gleich der Seitenlänge des die Außenkontur des Querschnittes der Haupthülsen 27 und 28 bildenden regelmäßigen Achteckes ist. Die miteinander fluchtenden Distanzhülsen 33 und 34 sind jeweils aus zwei Distanzhülsenteilen 133 bzw. 134 gebildet, von denen ein Distanzhülsenteil 133 bzw. 134 an der Außenkante der Haupthülsen 27 bzw. 28 an der Seite der Außenkontur zwischen zwei Seiten mit Verbindungsstegen 29 bzw. 30 und Noppen 31 bzw. 32 angeformt ist. Das andere Distanzhülsenteil 133 bzw. 134 ist an der Außenkante des Bügels 35 bzw. 36 zwischen zwei Seiten mit Verbindungsstegen 38 und 40 bzw. 38 und 42 und Noppen 37 und 39 bzw. 37 und 41 angeformt. Jedes Distanzhülsenteil 133 bzw. 134 ist eine halbe Distanzhülse mit einer in die Haupthülsen 27 bzw. 28 oder den Bügel 35 bzw. 36 übergehenden Distanzhülsenseite 135 bzw. 136 und zwei an dieser Distanzhülsenseite 135 bzw. 136 sitzenden halben Distanzhülsenseiten 137 bzw. 138. Die halben Distanzhülsenseiten 137 bzw. 138 von Haupthülsen 27 bzw. 28 und benachbarten Bügeln 35 bzw. 36 sind an Schweißstellen 139 bzw. 140 miteinander verschweißt. Zwischen den Außenkanten, an denen die Distanzhülsenteile 133 bzw. 134 sitzen, sind die Bügel 35 bzw. 36 parallel zu demjenigen Außensteg 23 bzw. 24 geformt, an dem sie festgeschweißt sind. Dort weisen sie jeweils in der Mitte je eine starre Noppe 37 auf, die in bezug auf den Bügel 35 bzw. 36 nach innen gerichtet ist. Ferner ist dort ein Verbindungssteg 38 zwischen den beiden Bügeln 35 und 36 angeformt, dessen Breite etwa gleich 1/3 der Seitenlänge des die Außenkontur des Querschnittes der Haupthülsen 27 und 28 bildenden regelmäßigen Achtecks ist, der in bezug auf die Bügel 35 und 36 nach außen gewölbt ist und der eine Anlagefeder für einen nicht dargestellten Stab in einer Gittermasche 26 bildet. Außerdem befinden sich an dem einen Schenkel der Bügel 35 und 36 eine in bezug auf den betreffenden Bügel nach außen gerichtete Noppe 39. An derselben Stelle ist auch ein Verbindungssteg 40 mit der gleichen Breite wie der Verbindungssteg 38 angeformt, der in bezug auf die beiden Bügel 35 und 36 nach innen gewölbt ist und der eine Anlagefeder für einen nicht dargestellten Stab in einer Gittermasche 26 bildet. Am anderen Schenkel der Bügel 35 und 36 ist eine in bezug auf diese Bügel 35 und 36 nach innen gerichtete starre Noppe 41 angebracht. An der gleichen Stelle ist ein Verbindungssteg 42 mit gleicher Breite wie der Verbindungssteg 38 zwischen den Stegen 35 und 36 angeformt, der in bezug auf die beiden Bügel 35 und 36 nach außen gewölbt ist und der ebenfalls eine Anlagefeder für einen nicht dargestellten Stab in einer Gittermasche 26 bildet.

Zwischen zwei an einer Ecke des Abstandhalters 22 rechtwinklig zueinander stoßenden Außenstegen 23 und 24 ist in einer Eckposition für die Gittermaschen 26 ein Paar miteinander fluchtender Winkelteile 43 und 44 nach den Fig. 8 und 9 mit L-förmigem Querschnitt aus den Stäben flach zugewandten Stegen angeordnet. Mit jedem ihrer beiden Schenkel stehen die Winkelteile 43 und 44 rechtwinklig auf der Innenseite eines anderen der beiden Außenstege 23 und 24 auf, den sie mit einer Zunge durchgreifen, an der sie mit dem betreffenden Außensteg verschweißt sind.

Zwischen ihren beiden Schenkeln haben die Winkelteile 43 und 44 einen Querschnitt mit einer Außenkontur, die gleich einem Viertel des regelmäßigen Achteckes ist, das die Außenkontur des Querschnittes der Haupthülsen 27 und 28 ist. In jedem der beiden zueinander parallelen Teilgitter des Abstandhalters 22 befindet sich zwischen einer Haupthülse 27 oder 28 und einem Winkelteil 43 bzw. 44 eine Distanzhülse 33 bzw. 34, deren Querschnitt die Außenkontur eines Rechteckes haben kann. Beim Ausführungsbeispiel ist die Außenkontur ein Quadrat mit einer Seitenlänge gleich der Seitenlänge des die Außenkontur des Querschnittes der Haupthülsen 27 und 28 bildenden regelmäßigen Achteckes. Diese miteinander fluchtenden Distanzhülsen 33 und 34 sind jeweils aus zwei Distanzhülsenteilen 133 bzw. 134 gebildet, von denen ein Distanzhülsenteil 133 bzw. 134 an der Außenkante der Haupthülse 27 bzw. 28 an der Seite der Außenkontur zwischen zwei Seiten mit Verbindungsstegen 29 bzw. 30 und Noppen 31 bzw. 32 angeformt ist. Das andere Distanzhülsenteil 133 bzw. 134 ist an der Außenkante des Winkelteiles 43 bzw. 44 angeformt. Jedes Distanzhülsenteil 133 bzw. 134 ist eine halbe Distanzhülse mit einer in die Haupthülse 27 bzw. 28 oder in das Winkelteil 43 bzw. 44 übergehenden Distanzhülsenseite 135 bzw. 136 und zwei an dieser Distanzhülsenseite 135 bzw. 136 sitzenden halben Distanzhülsenseiten 137 bzw. 138. Die halben Distanzhülsenseiten 137 bzw. 138 von einer Haupthülse 27 bzw. 28 und einem benachbarten Winkelteil 43 bzw. 44 sind an Schweißstellen 139 bzw. 140 miteinander verschweißt. Die Stege der Winkelteile 43 und 44 sind den nicht dargestellten Stäben im Abstandhalter 22 flach zugewandt.

Beiderseits der Übergangsstelle zu den Distanzhülsenteilen 133 bzw. 134 ist an den Schenkeln der Winkelteile 43 und 44 ein Verbindungssteg 45 und 46 angeformt. Die Breite beider Verbindungsstege 45 und 46 ist etwa gleich 1/3 der Seitenlänge des die Außenkontur des Querschnittes der Haupthülsen 27 und 28 darstellenden regelmäßigen Achtecks. Beide Verbindungsstege 45 und 46 sind in bezug auf die Winkelteile 43 und 44 nach außen gewölbt und bilden Anlagefedern jeweils für einen nicht dargestellten Stab in einer Gittermasche 26. An den Stellen, an denen die Verbindungsstege 45 bzw. 46 angeformt sind, haben die Schenkel der Winkelteile 43 und 44 jeweils eine in bezug auf die Winkelteile 43 und 44 nach innen gerichtete starre Noppe 47 bzw. 48. Diesen beiden starren Noppen 47 und 48 gegenüberliegend sind an der Innenseite der Außenstege 23 und 24 angeformte Stege 49 und 50 vorgesehen, die in bezug auf diese Außenstege 23 und 24 nach innen gewölbt sind und Anlagefedern für einen nicht dargestellten Stab in der Gittermasche 26 in der betreffenden Ecke des Abstandhalters 22 bilden. Ähnlich sind Anlagefedern bildende, bezüglich der Außenstege 23 und 24 nach innen gewölbte Stege 60 an den Außenstegen 23 und 24 gegenüber den starren Noppen 32 und 37 an den Haupthülsen 27 und 28 bzw. an den Bügeln 35 und 36 vorgesehen, die eine zu den Längsachsen der Haupthülsenpaare 27 und 28 parallele Richtung übergreifen.

In den Gittermaschen 26 des Abstandhalters 22, die entweder durch den Innenraum der Haupthülsen 27 und 28 bzw. der Bügel 35 und 36 aus U-förmigen Stegen bzw. der Winkelteile 43 und 44 aus L-förmigen Stegen oder aus dem Zwischenraum zwischen Distanzhülsen 33 und 34 und Haupthülsen 27 und 28 bzw. Bügeln 35 und 36 mit U-förmigen Stegen bzw. Winkelteilen 43 und 44 mit L-förmigen Stegen gebildet sind, findet jeweils ein nicht dargestellter Stab zwei elastische Dreipunktlagerungen, die einem in Längsrichtung des Kernreaktorbrennelementes strömenden Kühlmittel nur einen geringen Strömungswiderstand entgegensetzen.

Die paarweise fluchtenden Distanzhülsen 33 und 34 können auch z.B. an den Seiten ihrer Außenkontur nicht dargestellte Verbindungsstege aufweisen, deren Breite kleiner als der Umfang dieser Distanzhülsen ist. Auch können diese Distanzhülsen 33 und 34 zur Materialverringerung einen Längsschlitz aufweisen. Desgleichen können die Haupthülsen 27 und 28 mit einem Längsschlitz versehen sein.

Das erfindungsgemäße Kernreaktorbrennelement insbesondere mit einem Abstandhalter nach den Fig. 2 bis 9 kann auch ein Kernreaktorbrennelement für einen Druckwasserkernreaktor sein. Durch die Gittermaschen 26 des Abstandhalters 22 greifen bei einem solchen Kernreaktorbrennelement nicht nur Kernbrennstoff enthaltende Brennstäbe, sondern auch Steuerstabführungsrohre, die mit einem Ende an einer Kopfplatte eines Kopfteiles und mit dem anderen Ende an einer Fußplatte eines Fußteiles des Kernreaktorbrennelementes lösbar z.B. mit einer Schraubverbindung befestigt sind. Die Steuerstabführungsrohre durchsetzen Kopf- und Fußplatte rechtwinklig. Kopf- und Fußplatte können ebenfalls quadratisch sein. Die jeweils durch eine der Maschen 26 des Abstandhalters 22 greifenden Brennstäbe sind weder an der Kopf- noch an der Fußplatte des Kernreaktorbrennelementes befestigt, sondern sie haben zwischen Kopf- und Fußplatte in Längsrichtung Spiel und können sich daher in Richtung ihrer Längsachse d.h. in Längsrichtung des Kernreaktorbrennelementes frei ausdehnen.

## Patentansprüche

1. Kernreaktorbrennelement mit zueinander parallelen, nebeneinander angeordneten Stäben, insbesondere Kernbrennstoff enthaltenden Stäben, und mit einem Abstandhalter (22), der Gittermaschen (26) zur Aufnahme jeweils eines Stabes hat, die sich wie Felder eines Schachbrettes in dicht in Zeilen und in zu diesen Zeilen rechtwinkligen Spalten angeordneten Positionen befinden und die durch zwei zueinander parallele Teilgitter gebildet sind, welche gemeinsam an den Stäben flach zugewandten Außenstegen des Abstandhalters angebracht sind und jeweils eine Gittermasche darstellende Paare miteinander fluchtender Haupthülsen (27, 28) aufweist, von denen jede der beiden Haupthülsen einem anderen Teilgitter angehört, die einen Verbindungssteg (29, 30) zwischen den beiden Haupthülsen (27, 28) aufweisen, dessen Breite kleiner als der Umfang einer Haupthülse ist und der eine Anlagefeder für einen Stab darstellt, und die wie die Felder gleicher Farbe des Schachbrettes an den Positionen der Gittermaschen in den Zeilen und Spalten jeweils unter Freilassung einer Zwischenposition zwischen zwei besetzten Positionen angeordnet sind, sowie mit einer Distanzhülse (33, 34), die sich in jedem Teilgitter des Abstandhalters zwischen zwei Haupthülsen befindet, dadurch gekennzeichnet, daß die Distanzhülse (33, 34) aus zwei Distanzhülsenteilen (133, 134) gebildet ist, die sich auf derselben Seite des Teilgitters befinden, und daß an einer Kante jeder der beiden Haupthülsen (27, 28) eines der beiden Distanzhülsenteile (133, 134) angeformt ist.

2. Kernreaktorbrennelement nach Anspruch 1, dadurch geknnzeichnet, daß an den Positionen der Gittermaschen (26) in einer Reihe bzw. Spalte an einem Außensteg (23) oder (24) jeweils unter Freilassung einer Zwischenposition zwischen zwei besetzten Positionen ein Paar miteinander fluchtender Bügel (35, 36) mit U-förmigem Querschnitt aus den Stäben flach zugewandten Stegen angeordnet ist, die mit ihren beiden Schenkeln (35, 36) rechtwinklig auf der Innenseite des Außensteges (23) bzw. (24) stehen und die einen Verbindungssteg (38, 40, 42) mit einer Breite kleiner als der Bügelumfang als Anlagefeder für einen Stab aufweisen, daß sich in jedem Teilgitter zwischen einer Haupthülse (27) oder (28) und einem Bügel (35) bzw. (36) jeweils eine Distanzhülse (33) bzw. (34) befindet, daß die Distanzhülse (33) bzw. (34) aus zwei Distanzhülsenteilen (133) bzw. (134) gebildet ist, die sich auf derselben Seite des Teilgitters befinden, und daß an einer Kante der Haupthülse (27) bzw. (28) und des Bügels (35) bzw. (36) je eines der beiden Distanzhülsenteile (133) bzw. (134) angeformt ist.

3. Kernreaktorbrennelement nach Anspruch 1, dadurch gekennzeichnet, daß zwischen zwei an einer Ecke des Abstandhalters (2) aneinander stoßenden Außenstegen (23) und (24) in einer Eckposition für die Gittermaschen (26) ein Paar fluchtender Winkelteile (43, 44) mit L-förmigem Querschnitt aus den Stäben flach zugewandten Stegen angeordnet ist, die mit jedem ihrer beiden Schenkel (43) rechtwinklig auf der Innenseite eines anderen der beiden Außenstege (23) und (24) stehen und die einen Verbindungssteg (45, 46) mit einer Breite kleiner als der Winkelteilumfang als Anlagefeder für einen Stab aufweisen, daß sich in jedem Teilgitter zwischen einer Haupthülse (27) oder (28) und einem Winkelteil (43) bzw. (44) eine Distanzhülse (33) bzw. (34) befindet, daß die Distanzhülse (33) bzw. (34) aus zwei Distanzhülsenteilen (133) bzw. (134) gebildet ist, die sich auf derselben Seite des Teilgitters befinden, und daß an einer Kante der Haupthülse (27) bzw. (28) und des Winkelteiles (43) bzw. (44) je eines der beiden Distanzhülsenteile (133) bzw. (134) angeformt ist.

4. Kernreaktorbrennelement nach einem der Ansprüche 1 bis 3, dadurch gekennzeichnet, daß die beiden Distanzhülsenteile (133) bzw. (134) miteinander verschweißt sind.

5. Kernreaktorbrennelement nach Anspruch 1, dadurch gekennzeichnet, daß der Querschnitt der Distanzhülsen (33, 34) kleiner als der Querschnitt der Haupthülsen (27, 28) ist.

6. Kernreaktorbrennelement nach Anspruch 1, dadurch gekennzeichnet, Daß die Außenkontur des Querschnittes der Distanzhülsen (33, 34) ein Rechteck ist.

7. Kernreaktorbrennelement nach Anspruch 6, dadurch gekennzeichnet, daß der Abstandhalter (22) quadratisch mit geradlinig langgestreckten Außenstegen (23, 24) ist.

8. Kernreaktorbrennelement nach Anspruch 1, dadurch gekennzeichnet, daß die Außenkontur des Querschnittes der Haupthülsen (27, 28) wenigstens angenähert ein regelmäßiges Achteck ist.

9. Kernreaktorbrennelement nach Anspruch 6 und 8, dadurch gekennzeichnet, daß die Außenkontur des Querschnittes der Distanzhülsen (33, 34) ein Quadrat ist mit einer Seitenlänge, die wenigstens annähernd gleich der Seitenlänge der Außenkontur des Querschnittes der Haupthülsen (27, 28) ist.

10. Kernreaktorbrennelement nach Anspruch 1, dadurch gekennzeichnet, daß die Distanzhülsen (33, 34) in den beiden Teilgittern paarweise miteinander fluchten.

11. Kernreaktorbrennelement nach Anspruch 10, dadurch gekennzeichnet, daß die paarweise miteinander fluchtenden Distanzhülsen einen Verbindungssteg aufweisen, dessen Breite kleiner als der Umfang einer Distanzhülse ist.

12. Kernreaktorbrennelement nach Anspruch 1, dadurch gekennzeichnet, daß die Distanzhülsen einen Längsschlitz aufweisen.

13. Kernreaktorbrennelement nach Anspruch 1, dadurch gekennzeichnet, daß die Haupthülsen einen Längsschlitz aufweisen.

## Claims

1. Nuclear reactor fuel element having rods, which are arranged side by side and are parallel to each other, more particularly rods containing nuclear fuel, and having a spacer (22), which for the purpose of receiving, in each case, one rod has grid meshes (26), which are located, like the squares of a chessboard, in positions arranged closely in lines and in columns at right angles to these lines and which are formed by two partial grids which are parallel to each other and which are provided jointly on outer bars of the spacer, said bars facing the rods in a planar manner, and has, in each case, pairs of aligned main sleeves (27, 28) presenting a grid mesh, of which each of the two main sleeves belongs to a different partial grid, which have a connecting bar (29, 30) between the two main sleeves (27, 28), the width of which bar is smaller than the periphery of a main sleeve and which bar represents a locating spring for a rod, and which are arranged like the squares of the same colour of the chessboard at the positions of the grid meshes in the rows and columns, whilst leaving free, in each case, an intermediate position between two occupied positions, and also having a spacing sleeve (33, 34) which is located in each partial grid of the spacer between two main sleeves, characterised in that the spacing sleeve (33, 34) is formed of two spacing sleeve parts (133, 134) which are located on the same side of the partial grid and in that one of the two spacing sleeve parts (133, 134) is pre-formed at one edge of each of the two main sleeves (27, 28).

2. Nuclear reactor fuel element according to claim 1, charcterised in that arranged at the positions of the grid meshes (26) in a row or column on an outer bar (23) or (24), whilst leaving free, in each case, an intermediate position between two occupied positions, there is a pair of aligned stirrup-like members (35, 36) with U-shaped cross section consisting of bars facing the rods in a planar manner, which bars with their two sides (35, 36) stand at right angles on the inner side of the outer bar (23) or (24) and have a connecting bar (38, 40, 42) with a width which is smaller than the stirrup-like member periphery as a locating spring for a rod, in that, in each case, a spacing sleeve (33) or (34) is located in each partial grid between a main sleeve (27) or (28) and a stirrup-like member (35) or (36), in that the spacing sleeve (33) or (34) is formed of two spacing sleeve parts (133) or (134) which are located on the same side of the partial grid and in that each of the two spacing sleeve parts (133) or (134) is pre-formed at one edge of the main sleeve (27) or (28) and of the stirrup-like member (35) or (36).

3. Nuclear reactor fuel element according to claim 1, characterised in that arranged between two outer bars (23) and (24) which butt against each other at one corner of the spacer (2), in a corner position for the grid meshes (26) there is a pair of aligned angular portions (43, 44) with L-shaped cross section consisting of bars facing the rods in a planar manner, which bars with each of their two sides (43) stand at right angles on the inner side of a different outer bar of the two outer bars (23) and (24), and have a connecting bar (45, 46) with a width which is smaller than the angular portion periphery as a locating spring for a rod, in that a spacing sleeve (33) or (34) is located in each partial grid between a main sleeve (27) or (28) and an angular portion (43) or (44), in that the spacing sleeve (33) or (34) is formed of two spacing sleeve parts (133) or (134) which are located on the same side of the partial grid and in that each of the two spacing sleeve parts (133) or (134) is preformed at one edge of the main sleeve (27) or (28) and of the angular portion (43) or (44).

4. Nuclear reactor fuel element according to one of claims 1 to 3, characterised in that the two spacing sleeve parts (133) or (134) are welded together.

5. Nuclear reactor fuel element according to claim 1, charcterised in that the cross section of the spacing sleeves (33, 34) is smaller than the cross section of the main sleeves (27, 28).

6. Nuclear reactor fuel element according to claim 1, characterised in that the outer contour of the cross section of the spacing sleeves (33, 34) is a rectangle.

7. Nuclear reactor fuel element according to claim 6, characterised in that the spacer (22) is square with outer bars (23, 24) extended in a straight line.

8. Nuclear reactor fuel element according to claim 1, characterised in that the outer contour of the cross section of the main sleeves (27, 28) is at least approximately a regular octagon.

9. Nuclear reactor fuel element according to claim 6 and 8, characterised in that the outer contour of the cross section of the spacing sleeves (33, 34) is a square with a side length which is at least approximately equal to the side length of the outer contour of the cross section of the main sleeves (27, 28).

10. Nuclear reactor fuel element according to claim 1, characterised in that the spacing sleeves (33, 34) are in alignment with each other in pairs in the two partial grids.

11. Nuclear reactor fuel element according to claim 10, characterised in that the spacing sleeves, which are in alignment with each other in pairs, have a connecting bar, the width of which is smaller than the periphery of a spacing sleeve.

12. Nuclear reactor fuel element according to claim 1, characterised in that the spacing sleeves have a longitudinal slot.

13. Nuclear reactor fuel element according to claim 1, characterised in that the main sleeves have a longitudinal slot.

## Revendications

1. Assemblage combustible de réacteur nucléaire, comprenant des crayons disposés côte à côte en étant parallèles, notamment des crayons contenant du combustible nucléaire, et une grille d'espacement dont les mailles (26), dans chacune desquelles est reçu un crayon, se trouvent en des positions rangées comme les cases d'un échiquier en lignes et en colonnes perpendiculaires à ces lignes et sont formées par deux grilles partielles, parallèles, qui sont montées en commun sur les barrettes extérieures (23, 24) de la grille d'espacement tournant leur partie plate vers les crayons, qui comportent chacune une paire, constituant la maille de la grille, de douilles principales (27, 28) alignées, chacune des deux douilles principales faisant partie d'une grille partielle différente, et qui comportent une barrette de liaison (29, 30) entre les deux douilles principales, de largeur inférieure au pourtour d'une douille principale, constituant un ressort d'appui pour un crayon, et disposées comme les cases de même couleur de l'échiquier aux positions des mailles de la grille (26) dans les lignes et les colonnes en laissant libre une posittion intermédiaire entre deux positions occupées, ainsi qu'une douille d'entretoisement (33, 34) qui se trouve, dans chaque grille partielle de la grille d'espacement, entre deux douilles principales, cractérisé en ce que la douille d'entretoisement (33, 34) est formée de deux parties de douilles d'entretoisement (133, 134) qui se trouvent du même côté de la grille partielle et en ce que les deux parties de douilles d'entretoisement (133, 134) sont formées respectivement sur un bord de chacune des deux douilles principales (27, 28).

2. Assemblage combustible de réacteur nucléaire suivant la revendication 1, caractérisé en ce qu'en les positions des mailles de la grille (26) dans une ligne ou dans une colonne est montée sur une barrette extérieure (23) ou (24), tout en laissant libre une position intermédiaire entre deux positions occupées, une paire d'arceaux (35, 36) alignés, de section transversale en forme de U, issue des barrettes tournant leur partie plate vers les crayons, dont les deux branches sont perpendiculaires au côté intérieur de la barrette extérieure (23) et (24) et qui comportent une barrette de liaison (38, 40, 42) de largeur inférieure au pourtour de l'arceau et servant de ressort d'appui pour un crayon, et en ce que dans chaque grille partielle se trouve, entre une douille principale (27) ou (28) et un arceau (35) et (36), une douille d'entretoisement (33) et (34), en ce que la douille d'entretoisement (33) et (34) est formée de deux parties de douilles d'entretoisement (133) et (134) qui se trouvent du même côté de la grille partielle, et en ce que les deux parties de douilles d'entretoisement (133) et (134) sont formées respectivement sur un bord de la douille principale (27) et (28) et de l'arceau (35) et (36).

3. Assemblage combustible de réacteur nucléaire suivant la revendication 1, caractérisé en ce que, entre deux barrettes extérieures (23) et (24) aboutées l'une à l'autre à un sommet de la grille d'espacement (22), est monté, dans une position de sommet pour les mailles de la grille (26), un couple de cornières (43, 44) alignées de section transversale en forme de L, issues de barrettes tournant leurs parties plates vers les crayons, dont chacune des deux ailes est perpendiculaire au côté inférieur d'une autre des deux barrettes extérieures (23) et (24) et qui comportent une barrette de liaison (45, 46) de largeur inférieure au pourtout de la cornière et servant de ressort d'appui pour un crayon, et en ce que, dans chaque grille partielle, se trouve, entre une douille principale (27, 28) et une cornière (43) et (44), une douille d'entretoisement (33) et (34), en ce que la douille d'entretoisement (33) et (34) est formée de deux parties de douille d'entretoisement (133) et (134) qui se trouvent du même côté de la grille partielle, et en ce que les deux parties de douille d'entretoisement (133) et (134) sont formées respectivement sur un bord de la douille principale (27) et (28) et de la cornière (43) et (44).

4. Assemblage combustible de réacteur nucléaire suivant l'une des revendications 1 à 3, caractérisé en ce que les deux parties de douille d'entretoisement (133) et (134) sont soudées l'une à l'autre.

5. Assemblage combustible de réacteur nucléaire suivant la revendication, caractérisé en ce que la section transversale des douilles d'entretoisement (33, 34) est inférieure à la section transversale des douilles principales (27, 28).

6. Assemblage combustible de réacteur nucléaire suivant la revendication 1, caractérisé en ce que le contour extérieur de la section transversale des douilles d'entretoisement (33, 34) est un rectangle.

7. Assemblage combustible de réacteur nucléaire suivant la revendication 1, caractérisé en ce que la grille d'espacement (22) est carrée, en ayant des barrettes extérieures (23, 24) rectilignes.

8. Assemblage combustible de réacteur nucléaire suivant la revendication 1, caractérisé en ce que le contour extérieur de la section transversale des douilles principales (27, 28) est au moins approximativement un octogone régulier.

9. Assemblage combustible de réacteur nucléaire suivant la revendication 6 ou 8, caractérisé en ce que le contour extérieur de la section transversale des douilles d'entretoisement (33, 34) est un carré de longueur de côté au moins approximativement égale à la longueur du côté du contour extérieur de la section transversale des douilles principales (27, 28).

10. Assemblage combustible de réacteur nucléaire suivant la revendication 1, caractérisé en ce que les douilles d'entretoisement (33, 34) sont alignées par couple dans les deux grilles partielles.

11. Assemblage combustible de réacteur nucléaire suivant la revendication 10, caractérisé en ce que les douilles d'entretoisement alignées par couple comportent une barrette de liaison de largeur inférieure au pourtour d'une douille d'entretoisement.

12. Assemblage combustible de réacteur nucléaire suivant la revendication 1, caractérisé en ce que les douilles d'entretoisement comportent une fente longitudinale.

13. Assemblage combustible de réacteur nucléaire suivant la revendication 1, caractérisé en ce que les douilles principales comportent une fente longitudinale.

FIG 1

FIG 3

FIG 2

11

FIG 5

FIG 4

FIG 7

FIG 6

FIG 9

FIG 8